# EUROPEAN PATENT APPLICATION

(11) **EP 4 672 478 A1**
(43) Date of publication of application: **31.12.2025**
(21) Application number: 24809943.4
(22) Date of filing: 22.01.2024
(51) Int. Cl.: H01M 50/503, H01M 50/533, H01M 50/107, H01M 50/213, H01M 50/249

(54) **CONNECTING ASSEMBLY, BATTERY CELL, BATTERY, ELECTRIC DEVICE, AND CONNECTING MEMBER**

(30) Priority: 23.05.2023 CN 202321265121 U
(71) Applicant: Contemporary Amperex Technology Co., Limited, Ningde, Fujian 352100 (CN)
(72) Inventor: SU, Huasheng, Ningde, Fujian 352100 (CN)
(74) Representative: Lorenz Seidler Gossel Part. mbB
(86) International application number: PCT/CN2024/073496
(87) International publication number: WO 2024/239693

(57) **Abstract**

Examples of the present application provide a connecting member (233), a battery cell (20), a battery (10), a power consuming apparatus, and a connecting element. The connecting member (233) includes a first connecting element (2331) and a second connecting element (2332) connected to each other. A portion of the first connecting element (2331) and a portion of the second connecting element (2332) are stacked in a thickness direction of the connecting member (233). One of the first connecting element (2331) and the second connecting element (2332) is configured to be connected to a tab. The other of the first connecting element (2331) and the second connecting element (2332) is configured to be connected to an electrode terminal. A thickness of the connecting member (233) at a connecting position (2333) of the first connecting element (2331) and the second connecting element (2332) is less than a sum of maximum thicknesses of the first connecting element (2331) and the second connecting element (2332). According to the connecting member (233), the battery cell (20), the battery (10), the power consuming apparatus, and the connecting element in the examples of the present application, the strength of connection between the first connecting element (2331) and the second connecting element (2332) in the connecting member (233) can be improved.

## Description

The present application claims priority to Chinese Patent Application No. 202321265121.X, filed with the China National Intellectual Property Administration on May 23, 2023 and entitled "CONNECTING MEMBER, BATTERY CELL, BATTERY, POWER CONSUMING APPARATUS, AND CONNECTING ELEMENT", which is incorporated herein by reference in its entirety.

### TECHNICAL FIELD

The present application relates to the field of battery technologies, and in particular, to a connecting member, a battery cell, a battery, a power consuming apparatus, and a connecting element.

### BACKGROUND

An electrode terminal and a tab in a battery cell are electrically connected to each other by using a connecting member. The connecting member generally includes two connecting elements connected to each other. One of the connecting elements is connected to the tab, and the other connecting element is connected to the electrode terminal. At present, the connecting member may have a problem that connecting interfaces of the two connecting elements are easily loosened and disconnected.

### SUMMARY

Examples of the present application provide a connecting member, a battery cell, a battery, a power consuming apparatus, and a connecting element. The strength of connection between a first connecting element and a second connecting element in the connecting member can be improved.

According to a first aspect, a connecting member is provided, including: a first connecting element and a second connecting element. A portion of the first connecting element and a portion of the second connecting element are stacked and connected in a thickness direction of the connecting member. One of the first connecting element and the second connecting element is configured to be connected to a tab. The other of the first connecting element and the second connecting element is configured to be connected to an electrode terminal. A thickness of the connecting member at a connecting position of the first connecting element and the second connecting element is less than a sum of maximum thicknesses of the first connecting element and the second connecting element.

In this example, the thickness of the connecting member at the connecting position of the first connecting element and the second connecting element is set to be less than the sum of maximum thicknesses of the first connecting element and the second connecting element, which facilitates full friction between surfaces of the first connecting element and the second connecting element when the first connecting element and the second connecting element are connected together by means of welding, thereby improving bonding strength between the first connecting element and the second connecting element.

In a possible embodiment, the first connecting element and/or the second connecting element are/is provided with a thinning region(s) at the connecting position.

In this example, the first connecting element and/or the second connecting element are/is provided with the thinning region(s) at the connecting position, so that when the first connecting element and the second connecting element are connected, the first connecting element and/or the second connecting element can be better penetrated, thereby more facilitating fixed bonding of the first connecting element and the second connecting element.

In a possible embodiment, the second connecting element is provided with a second thinning region at the connecting position. The second connecting element is provided with a first groove open toward the first connecting element at the connecting position. The second thinning region of the second connecting element includes the first groove.

In this example, the second connecting element is provided with the first groove open toward the first connecting element at the connecting position, so that the thickness of the connecting member can be reduced at the connecting position, thereby facilitating fixed connection between the first connecting element and the second connecting element, and improving the bonding strength between the first connecting element and the second connecting element.

In a possible embodiment, the second connecting element is provided with a second thinning region at the connecting position. The second connecting element is provided with a through hole at the connecting position. The second thinning region of the second connecting element includes the through hole.

In this example, the second connecting element is provided with the through hole at the connecting position, so that the thickness of the connecting member can be reduced at the connecting position, thereby facilitating fixed connection between the first connecting element and the second connecting element, and improving the bonding strength between the first connecting element and the second connecting element.

In a possible embodiment, the second connecting element is further provided with a second groove open away from the first connecting element at the connecting position. The first groove and the second groove share a bottom wall.

In this example, at the connecting position, the second connecting element is provided with the first groove open toward the first connecting element, and is provided with the second groove open away from the first connecting element, so that the thickness of the connecting member at the connecting position can be further reduced, thereby further improving the bonding strength between the first connecting element and the second connecting element.

In a possible embodiment, the second connecting element is provided with a second thinning region at the connecting position. The second connecting element is provided with a second groove open away from the first connecting element at the connecting position. The second thinning region of the second connecting element includes the second groove.

In this example, the second connecting element is provided with the second groove open away from the first connecting element at the connecting position, so that the thickness of the connecting member can be reduced at the connecting position, thereby facilitating fixed connection between the first connecting element and the second connecting element, and improving the bonding strength between the first connecting element and the second connecting element.

In a possible embodiment, the first connecting element is provided with a convex portion projecting toward the second connecting element at the connecting position. The convex portion of the first connecting element is accommodated in the second thinning region of the second connecting element.

In this example, the first connecting element is provided with the convex portion projecting toward the second connecting element at the connecting position, and the convex portion is accommodated in the second thinning region of the second connecting element, so that the first connecting element may be fitted into the second connecting element, thereby improving the bonding strength between the first connecting element and the second connecting element.

In a possible embodiment, the first connecting element is provided with a first thinning region at the connecting position. A first surface of the first connecting element is recessed toward the second connecting element at the connecting position to form a first recessed portion. The first thinning region of the first connecting element includes the first recessed portion. The first surface is a surface of the first connecting element far away from the second connecting element.

In this example, the first surface of the first connecting element is recessed toward the second connecting element at the connecting position to form the first recessed portion, so that the thickness of the connecting member can be reduced at the connecting position, thereby facilitating the fixed connection between the first connecting element and the second connecting element, and improving the bonding strength between the first connecting element and the second connecting element.

In a possible embodiment, a size of a first recessed portion of the first connecting element is greater than a size of a second recessed portion of the second connecting element in a first direction. The first recessed portion is formed by recessing a first surface of the first connecting element toward the second connecting element at the connecting position. The second recessed portion is formed by recessing a second surface of the second connecting element toward the first connecting element at the connecting position. The first surface is a surface of the first connecting element far away from the second connecting element. The second surface is a surface of the second connecting element far away from the first connecting element. The first direction is perpendicular to the thickness direction of the connecting member.

In this example, the size of the first recessed portion of the first connecting element at the connecting position is set to be greater than the size of the second recessed portion of the second connecting element at the connecting position in the first direction, to facilitate penetration of the first connecting element and better bond the first connecting element and the second connecting element together, thereby improving the bonding strength between the first connecting element and the second connecting element.

In a possible embodiment, a size of a first recessed portion of the first connecting element is greater than a size of a second recessed portion of the second connecting element in the thickness direction of the connecting member in a first direction. The first recessed portion is formed by recessing a first surface of the first connecting element toward the second connecting element at the connecting position. The second recessed portion is formed by recessing a second surface of the second connecting element toward the first connecting element at the connecting position. The first surface is a surface of the first connecting element far away from the second connecting element. The second surface is a surface of the second connecting element far away from the first connecting element.

In this example, the size of the first recessed portion of the first connecting element at the connecting position is set to be greater than the size of the second recessed portion of the second connecting element at the connecting position in the thickness direction of the connecting member, to better bond the first connecting element and the second connecting element together, thereby improving the bonding strength between the first connecting element and the second connecting element.

In a possible embodiment, a shape of an orthographic projection of the thinning region in a plane perpendicular to the thickness direction of the connecting member is circular or square.

In this example, the shape of the orthographic projection of the thinning region in the plane perpendicular to the thickness direction of the connecting member is set to be circular or square, facilitating processing of the thinning region.

In a possible embodiment, the first connecting element is configured to be connected to the electrode terminal. The second connecting element is configured to be connected to the tab. The first connecting element includes a plurality of connecting plates. The second connecting element includes a single connecting plate.

In this example, the first connecting element connected to the electrode terminal is configured to include the plurality of connecting plates, and the second connecting element connected to the tab is configured to include the single connecting plate, so that over-current and internal resistance satisfy requirements of a power-type battery, thereby facilitating improving performance of a battery including the connecting member.

In a possible embodiment, at least one connecting plate, close to the single connecting plate, among the plurality of connecting plates is bent toward the single connecting plate at the connecting position to form a convex portion. The single connecting plate is provided with a through hole, or the single connecting plate is provided with a groove open toward the plurality of connecting plates. The convex portion of the plurality of connecting plates is embedded in the groove or the through hole of the single connecting plate.

In this example, the plurality of connecting plates have a relatively large thickness, and bending has little impact on the plurality of connecting plates. Therefore, the convex portion formed by bending the plurality of connecting plates is embedded in the groove or the through hole provided in the single connecting plate, so that the bonding strength between the first connecting element and the second connecting element can be improved without affecting the performance of the connecting member.

In a possible embodiment, the connecting member is a negative connecting member. A material of the first connecting element includes copper. A material of the second connecting element includes surface-nickeled copper.

In this example, the plurality of connecting plates in the negative connecting member are made of copper, and the single connecting plate is made of surface-nickeled copper, so that reflection of light of the negative connecting member can be reduced while the conductivity of the negative connecting member is improved.

In a possible embodiment, the connecting member is a positive connecting member. A material of the first connecting element includes aluminum. A material of the second connecting element includes surface-inked aluminum.

In this example, the plurality of connecting plates in the positive connecting member are made of aluminum, and the single connecting plate is made of surface-inked aluminum, so that reflection of light of the positive connecting member can be reduced while the conductivity of the positive connecting member is improved.

In a possible embodiment, the first connecting element and the second connecting element are connected by means of ultrasonic welding to form the connecting position.

In this example, the first connecting element and the second connecting element are connected by means of ultrasonic welding, which is high in welding speed, low in pollution, and low in cost.

According to a second aspect, a battery cell is provided, including an electrode assembly, an electrode terminal, and a connecting member according to the first aspect or any possible embodiment in the first aspect. A tab of the electrode assembly and the electrode terminal are connected by using the connecting member.

In this example, the connecting member in the battery cell includes a first connecting element and a second connecting element connected to each other. A thickness of the connecting member at a connecting position of the first connecting element and the second connecting element is set to be less than a sum of thicknesses of the first connecting element and the second connecting element, which can ensure full friction between surfaces of the first connecting element and the second connecting element when the first connecting element and the second connecting element are connected together by means of welding, thereby improving bonding strength between the first connecting element and the second connecting element.

In a possible embodiment, the first connecting element includes a plurality of connecting plates. The second connecting element includes a single connecting plate. The first connecting element is connected to the electrode terminal. The second connecting element is connected to the tab. The first connecting element is connected to a side, far away from the tab, of the second connecting element.

In this example, compared with connecting the plurality of connecting plates to a side, close to the tab, of the single connecting plate, connecting the plurality of connecting plates to the side, far away from the tab, of the single connecting plate facilitates bending and process welding of the connecting member.

In a possible embodiment, the first connecting element includes two bending portions. A first bending portion of the two bending portions is connected to the electrode terminal. A second bending portion of the two bending portions is connected to the second connecting element. A bending direction of the first bending portion is opposite to a bending direction of the second bending portion.

In this example, the plurality of connecting plates of the connecting member are bent twice to connect the tab and the electrode terminal together, facilitating reducing space occupied by the connecting member in the battery cell.

According to a third aspect, a battery is provided, including a plurality of battery cells provided according to the second aspect.

According to a fourth aspect, a power consuming apparatus is provided, including a battery according to the third aspect. The battery is configured to supply electric energy to the power consuming apparatus.

According to a fifth aspect, a connecting element is provided. A first end of the connecting element is provided with a thinning region, and the first end of the connecting element is configured to be stacked with a first end of another connecting element in a thickness direction of the connecting element and is welded in the thinning region. One of a second end of the connecting element and a second end of the other connecting element is configured to be connected to a tab. The other of the second end of the connecting element and the second end of the other connecting element is configured to be connected to an electrode terminal.

### BRIEF DESCRIPTION OF THE DRAWINGS

To provide a clearer explanation of technical solutions of examples of the present application, a brief introduction will be given to the accompanying drawings required in the examples of the present application. It is evident that the accompanying drawings described below are only some examples of the present application. For a person of ordinary skill in the art, other accompanying drawings may be obtained based on the accompanying drawings without any creative effort.
FIG. 1 is a schematic structural diagram of a vehicle disclosed in an example of the present application;
FIG. 2 is a schematic structural diagram of a battery disclosed in an example of the present application;
FIG. 3 is a schematic structural diagram of a battery cell disclosed in an example of the present application;
FIG. 4 is an exploded view of an end cover assembly disclosed in an example of the present application;
FIG. 5 shows a top view of a connecting member according to an example of the present application;
FIG. 6 shows a first cross-sectional view of the connecting member in FIG. 5 along A-A';
FIG. 7 shows an exploded schematic diagram of a first connecting element and a second connecting element in FIG. 6;
FIG. 8 shows a second cross-sectional view of the connecting member in FIG. 5 along A-A';
FIG. 9 shows a third cross-sectional view of the connecting member in FIG. 5 along A-A';
FIG. 10 shows a fourth cross-sectional view of the connecting member in FIG. 5 along A-A';
FIG. 11 shows a fifth cross-sectional view of the connecting member in FIG. 5 along A-A'; and
FIG. 12 shows a front view of a bent connecting member according to an example of the present application.

In the accompanying drawings, the accompanying drawings are not drawn in an actual proportion.

### DETAILED DESCRIPTION

To make the objectives, technical solutions, and advantages of the examples of the present application clearer, the following clearly describes the technical solutions in the examples of the present application with reference to the accompanying drawings in the examples of the present application. Apparently, the described examples are some examples of the present application rather than all of the examples. All other examples obtained by a person of ordinary skill in the art based on the examples of the present application without making creative efforts shall fall within the protection scope of the present application.

Unless otherwise defined, all technical and scientific terms used in the present application have same meanings as commonly understood by a person skilled in the technical field of the present application. The terms used in the present application are merely for an objective of describing specific examples, and are not intended to limit the present application. The terms "include", "have" and any variations thereof in the specification and claims of the present application and in the foregoing descriptions of the accompanying drawings are intended to cover non-exclusive inclusion. In the specification, claims, or accompanying drawings of the present application, the terms "first", "second", and so on are intended to distinguish different objects but do not describe a specific order or primary and secondary relation.

Nouns of locality appearing in the following descriptions are directions shown in the figures, and are not intended to limit a specific structure of the present application. In the descriptions of the present application, it should be further noted that unless otherwise explicitly specified or defined, the terms such as "mount", "connect", and "connection" should be understood in a broad sense. For example, the connection may be a fixed connection, a detachable connection, or an integral connection. Alternatively, the connection may be a direct connection or an indirect connection through an intermediary. A person of ordinary skill in the art may understand specific meanings of the terms in the present application according to specific situations.

Reference to "an example" in the present application means that a particular feature, structure or characteristic described in combination with the example may be included in at least one example of the present application. The appearances of the phrase in various places in the specification are not necessarily all referring to the same example, nor a separate or alternative example that is mutually exclusive of other examples. It is explicitly and implicitly understood by a person skilled in the art that the examples described in the present application may be combined with another example.

In the present application, the term "and/or" is merely an association to describe associated objects. It may mean that there are three relationships, such as A and/or B, which means that A exists alone, A and B exist at the same time, and B exists alone. In addition, in the present application, the character "/" usually indicates an "or" relationship between the associated objects.

In the present application, the term "a plurality of" means two or more (including two). Similarly, "a plurality of groups" means two or more groups (including two groups), and "a plurality of pieces" means two or more pieces (including two pieces).

In the examples of the present application, a battery cell may be a secondary battery. The secondary battery is referred to as a battery cell that may be continuously used by activating an active material in a charging manner after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the examples of the present application.

The battery cell generally includes an electrode assembly. The electrode assembly includes a positive electrode, a negative electrode, and a spacer. During charging and discharging of the battery cell, active ions (for example, lithium ions) are intercalated and deintercalated back and forth between the positive electrode and the negative electrode. The spacer is disposed between the positive electrode and the negative electrode, may prevent a short circuit between the positive and negative electrodes, and may allow the active ions to pass through.

In some examples, the positive electrode may be a positive electrode plate. The positive electrode plate may include a positive electrode current collector and a positive electrode active material disposed on at least one surface of the positive electrode current collector.

As an example, the positive electrode current collector has two surfaces opposite to each other in a thickness direction of the positive electrode current collector. The positive electrode active material is disposed on either or both of the two opposite surfaces of the positive electrode current collector.

As an example, the positive electrode current collector may be a metal foil or a composite current collector. For example, silver surface-treated aluminum or stainless steel, stainless steel, copper, aluminum, nickel, a carbon electrode, carbon, nickel, titanium, or the like may be used as the metal foil. The composite current collector may include a polymer material substrate and a metal layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

As an example, the positive electrode active material may include at least one of the following materials: lithium-containing phosphates, lithium transition metal oxides, and their respective modified compounds. However, the present application is not limited to such materials, and may alternatively use another conventional material that may be used as a positive electrode active material for batteries. Only one or a combination of two or more of these positive electrode active materials may be used. An example of the lithium-containing phosphates may include, but is not limited to, at least one of lithium iron phosphate (for example, LiFePO4 (also referred to as LFP for short)), a composite material of lithium iron phosphate and carbon, lithium manganese phosphate (for example, LiMnPO4), a composite material of lithium manganese phosphate and carbon, lithium iron manganese phosphate, and a composite material of lithium manganese iron phosphate and carbon.

In some examples, the negative electrode may be a negative electrode plate. The negative electrode plate may include a negative electrode current collector.

As an example, the negative electrode current collector may be a metal foil or a composite current collector. For example, silver surface-treated aluminum or stainless steel, stainless steel, copper, aluminum, nickel, a carbon electrode, used carbon, nickel, titanium, or the like may be used as the metal foil. The composite current collector may include a polymer material substrate and a metal layer. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

As an example, the negative electrode plate may include a negative electrode current collector and a negative electrode active material disposed on at least one surface of the negative electrode current collector.

As an example, the negative electrode current collector has two surfaces opposite to each other in a thickness direction of the negative electrode current collector. The negative electrode active material is disposed on either or both of the two opposite surfaces of the negative electrode current collector.

As an example, the negative electrode active material may be a negative electrode active material used for a battery cell and well known in the art. As an example, the negative electrode active material may include at least one of the following materials: artificial graphite, natural graphite, soft carbon, hard carbon, a silicon-based material, a tin-based material, lithium titanate, and the like.

In some examples, the negative electrode may be metal foam. The metal foam may be nickel foam, copper foam, aluminum foam, alloy foam, carbon foam, or the like. When the metal foam is used as the negative electrode plate, a negative electrode active material may not be disposed on a surface of the metal foam. Alternatively, the negative electrode active material may be disposed.

As an example, the negative electrode current collector may further be filled or/and deposited with a lithium source material, a potassium metal, or a sodium metal. The lithium source material is a lithium metal and/or a lithium-rich material.

In some examples, a material of the positive electrode current collector may be aluminum. A material of the negative electrode current collector may be copper.

In some embodiments, the electrode assembly further includes a spacer. The spacer is disposed between the positive electrode and the negative electrode.

In some embodiments, the spacer is a separator. A type of the separator is not particularly limited in the present application, and any well-known separator with a porous structure having good chemical stability and mechanical stability may be selected.

As an example, a main material of the separator may be selected from at least one of glass fiber, non-woven fabric, polyethylene, polypropylene, polyvinylidene fluoride, and ceramic.

In some embodiments, the spacer is a solid electrolyte. The solid electrolyte is disposed between the positive electrode and the negative electrode, and is capable of transmitting ions and isolating the positive and negative electrodes.

In some embodiments, the battery cell further includes an electrolyte. The electrolyte is capable of conducting ions between the positive and negative electrodes. A type of the electrolyte is not specifically limited in the present application, and may be selected according to requirements. The electrolyte may be liquid, gelled, or solid.

In some embodiments, the electrode assembly is a winding structure. The positive electrode plate and the negative electrode plate are wound into the winding structure.

In some embodiments, the electrode assembly is a stacked structure.

As an example, a plurality of positive electrode plates and a plurality of negative electrode plates may be respectively disposed. The plurality of positive electrode plates and the plurality of negative electrode plates are alternately stacked.

As an example, a plurality of positive electrode plates may be disposed. A negative electrode plate is folded to form a plurality of folded segments that are stacked. One positive electrode plate is sandwiched between adjacent folded segments.

As an example, both a positive electrode plate and a negative electrode plate are folded to form a plurality of folded segments that are stacked.

As an example, a plurality of spacers may be respectively disposed between any adjacent positive electrode plates or negative electrode plates.

As an example, the spacer may be continuously disposed, and is disposed between any adjacent positive electrode plates or negative electrode plates in a folding or winding manner.

In some embodiments, the shape of the electrode assembly may be a cylindrical shape, a flat shape, a polygonal prism shape, or the like.

In some embodiments, the electrode assembly is provided with a tab. The tab may output a current from the electrode assembly. The tab includes a positive tab and a negative tab.

In some embodiments, the battery cell may include a shell. The shell is configured to encapsulate the electrode assembly, the electrolyte, and other components. The shell may be a steel shell, an aluminum shell, a plastic shell (for example, polypropylene), a composite metal shell (for example, a composite copper-aluminum shell), an aluminum-plastic film, or the like. The shell includes a case and a cover plate.

As an example, the battery cell may be a cylindrical battery cell, a prismatic battery cell, a pouch cell, or a battery cell of another shape. The prismatic battery cell includes a square battery cell, a blade battery cell, or a multi-prismatic battery. The multi-prismatic battery is, for example, a hexagonal prismatic battery. This is not specifically limited in the present application.

A battery mentioned in examples of the present application may be a single physical module including one or more battery cells to provide a higher voltage and a higher capacity. When there are a plurality of battery cells, the plurality of battery cells are connected in series, in parallel, or in series-parallel by using a bus component.

In some examples, the battery may be a battery module. When there are a plurality of battery cells, the plurality of battery cells are arranged and fixedly formed into a battery module.

In some examples, the battery may be a battery pack. The battery pack includes a box and a battery cell. The battery cell or the battery module is accommodated in the box.

In some examples, the box may be used as a portion of a chassis structure of a vehicle. For example, a portion of the box may become at least a portion of a floor of the vehicle. Alternatively, a portion of the box may become at least a portion of a cross beam and a longitudinal beam of the vehicle.

In general, an electrode terminal and a tab in a battery cell are electrically connected to each other by using a connecting member. The connecting member generally includes two connecting elements connected to each other. One of the connecting elements is connected to the tab, and the other connecting element is connected to the electrode terminal. At present, the connecting member may have a problem that connecting interfaces of the two connecting elements are easily loosened and disconnected.

To this end, an example of the present application provides a connecting member, aiming to reduce a thickness of the connecting member at a connecting position of a first connecting element and a second connecting element, to better fix the first connecting element and the second connecting element together, thereby improving connection stability of the first connecting element and the second connecting element.

The technical solutions described in this example of the present application are all applicable to various power consuming devices using a battery.

The power consuming device may be a vehicle, a mobile phone, a portable device, a notebook computer, a ship, a spacecraft, an electric toy, an electric tool, or the like. The vehicle may be a fuel powered vehicle, a gas powered vehicle, or a new energy vehicle. The new energy vehicle may be a pure electric vehicle, a hybrid electric vehicle, or an extended range vehicle, or the like. The spacecraft includes an airplane, a rocket, a space shuttle, a spaceship, and the like. The electric toy includes a fixed or mobile electronic toy, such as a game console, an electric vehicle toy, an electric ship toy, an electric aircraft toy, and the like. The electric tool includes a metal-cutting electric tool, a grinding electric tool, an assembly electric tool, and a railway electric tool, such as an electric drill, an electric grinder, an electric wrench, an electric screwdriver, an electric hammer, an electric impact drill, a concrete vibrator, an electric planer, and the like. The foregoing power consuming device is not specifically limited in this example of the present application.

For ease of description, the following example is described by using an example in which the power consuming device is a vehicle.

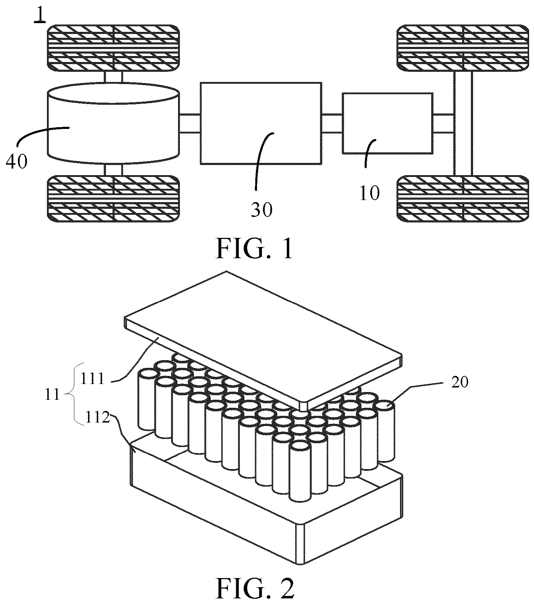

For example, FIG. 1 shows a schematic structural diagram of a vehicle 1 according to an example of the present application. The vehicle 1 may be a fuel powered vehicle, a gas powered vehicle, or a new energy vehicle. The new energy vehicle may be a pure electric vehicle, a hybrid electric vehicle, or an extended range vehicle, or the like. A motor 40, a controller 30 and a battery 10 may be disposed inside the vehicle 1. The controller 30 is configured to control the battery 10 to supply power to the motor 40. For example, the battery 10 may be disposed on the bottom, in the front, or in the rear of the vehicle 1. The battery 10 may be configured to supply power to the vehicle 1. For example, the battery 10 may be used as an operating power supply of the vehicle 1 and used for a circuit system of the vehicle 1, for example, may be used for operating electricity requirements during starting, navigation, and operation of the vehicle 1. In another example of the present application, the battery 10 may be used not only as the operating power supply of the vehicle 1, but also as a driving power supply of the vehicle 1, to alternatively or partially replace fuel or natural gas to provide driving power for the vehicle 1.

For example, FIG. 2 shows a schematic structural diagram of a battery 10 according to an example of the present application. The battery 10 may include a plurality of battery cells 20. The battery 10 may further include a box 11 in addition to the battery cell 20. The box 11 has a hollow structure inside. The plurality of battery cells 20 may be accommodated in the box 11. As shown in FIG. 2, the box 11 may include two portions: a first box portion 111 and a second box portion 112. The first box portion 111 and the second box portion 112 fit together. Shapes of the first box portion 111 and the second box portion 112 may be determined according to a combined shape of the plurality of battery cells 20. At least one of the first box portion 111 and the second box portion 112 has an opening. For example, as shown in FIG. 2, only one of the first box portion 111 and the second box portion 112 is a hollow cuboid having an opening, and the other box portion is plate-shaped, to cover the opening. An example in which the second box portion 112 is a hollow cuboid, only one face is an open face, and the first box portion 111 is plate-shaped is used herein. The first box portion 111 covers the opening of the second box portion 112 to form the box 11 having a closed cavity. The cavity may be used for accommodating the plurality of battery cells 20. After being connected in series, in parallel, or in series-parallel, the plurality of battery cells 20 are placed in the box 11 formed by fitting of the first box portion 111 and the second box portion 112.

For another example, different from that shown in FIG. 2, the first box portion 111 and the second box portion 112 may each be a hollow cuboid and may separately have only one face serving as an open face. An opening of the first box portion 111 is opposite to an opening of the second box portion 112, and the first box portion 111 and the second box portion 112 fit each other to form a box having a closed cavity. After being connected in series, in parallel, or in series-parallel, the plurality of battery cells 20 are placed in the box 11 formed by fitting of the first box portion 111 and the second box portion 112.

In some examples, the battery 10 may further include other structures, which are not described one by one in detail herein. For example, the battery 10 may further include a bus component (not shown). The bus component is configured to implement electrical connection between the plurality of battery cells 20. Specifically, the bus component may implement electrical connection between the battery cells 20 by connecting electrode terminals of the battery cells 20. In some examples, the bus component may be fixed to the electrode terminals of the battery cells 20 by welding. Electric energy of the plurality of battery cells 20 may be further led out by a conductive mechanism passing through the box. In some examples, the conductive mechanism may belong to the bus component.

There may be a plurality of battery cells 20 to satisfy different use power requirements. The plurality of battery cells may be connected in series or in parallel or in series-parallel. The series-parallel is a mixture of serial connection and parallel connection. The battery 10 may alternatively be referred to as a battery pack. In some examples, the plurality of battery cells may be connected in series, in parallel, or in series-parallel to form battery modules. Then, the plurality of battery modules are connected in series, in parallel, or in series-parallel to form the battery 10. To be specific, the plurality of battery cells may directly form the battery 10, or may first form the battery modules, which then form the battery 10.

For ease of description, the following describes the technical solution of the present application by using the cylindrical battery cell 20 shown in FIG. 2 as an example. However, it should be understood that the battery cell 20 in this example of the present application may be a cylindrical battery cell, or may be a square battery cell, a blade battery cell, or the like.

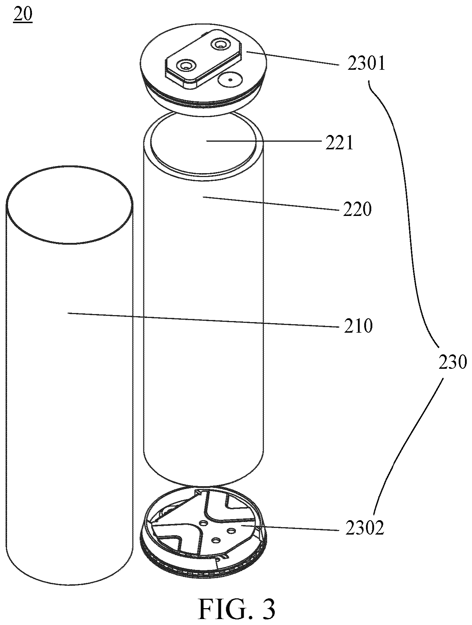

FIG. 3 is a schematic structural diagram of a battery cell according to an example of the present application. As shown in FIG. 3, the battery cell 20 includes a case 210, an electrode assembly 220, and an end cover assembly 230. The case 210 and the end cover assembly 230 form a shell or a battery box. The case 210 is formed of a metal, for example, aluminum. The case 210 may be determined according to a combined shape of one or more electrode assemblies 220. For example, the case 210 may be a hollow cylinder shown in FIG. 3.

The case 210 has an opening. The electrode assembly 220 is accommodated in the case 210. The end cover assembly 230 is configured to cover the opening, so as to accommodate the electrode assembly 220 in the case 210. The case 210 and the end cover assembly 230 accommodate and protect the electrode assembly 220 and other components. The case 210 is filled with an electrolyte, for example, an electrolyte solution.

As shown in FIG. 3, the end cover assembly 230 includes a negative end cover assembly 2301 and a positive end cover assembly 2302. The negative end cover assembly 2301 and the positive end cover assembly 2302 respectively cover the opening of the case 210 from two ends of the case 210, to cover the electrode assembly 220 in the case 210. The negative end cover assembly 2301 is configured to dispose a negative electrode terminal. The positive end cover assembly 2302 is configured to dispose a positive electrode terminal. The electrode assembly 220 is provided with a tab 221. The positive electrode terminal is electrically connected to a positive tab of the electrode assembly 220. The negative electrode terminal is electrically connected to a negative tab of the electrode assembly 220. There may be any quantity of positive electrode terminals and negative electrode terminals. For example, the battery cell 20 may have two positive electrode terminals and two negative electrode terminals. The two positive electrode terminals are disposed on the positive end cover assembly 2302. The two negative electrode terminals are disposed on the negative end cover assembly 2301. A structure of the positive end cover assembly 2302 is the same as that of the negative end cover assembly 2301. The end cover assembly 230 described below may be any one of the positive end cover assembly 2302 and the negative end cover assembly 2301.

In the battery cell 20, according to an actual use requirement, there may be one or more electrode assemblies 220. For example, as shown in FIG. 3, the battery cell 20 is provided with one electrode assembly 220.

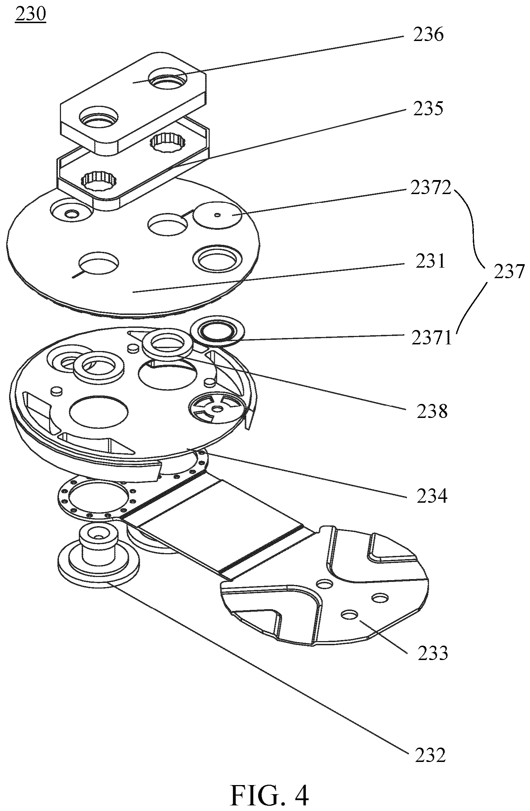

FIG. 4 shows an exploded view of an end cover assembly 230 according to an example of the present application. As shown in FIG. 4, the end cover assembly 230 includes an end cover 231, an electrode terminal 232, and a connecting member 233. The electrode terminal 232 is disposed on the end cover 231. The connecting member 233 is configured to connect the electrode terminal 232 to a tab (not shown) of the electrode assembly 220.

In some examples, as shown in FIG. 4, a first insulating element 234 is disposed between the end cover 231 and the electrode terminal 232. The first insulating element 234 is alternatively referred to as lower plastic and is configured for insulation and isolation between the electrode terminal 232 and the end cover 231.

In some examples, as shown in FIG. 4, the battery cell 20 further includes a riveting block 236. The riveting block 236 is configured to fix the electrode terminal 232 that is convexly disposed on the end cover 231.

In some examples, as shown in FIG. 4, the battery cell 20 further includes a second insulating element 235. The second insulating element 235 is alternatively referred to as upper plastic, and is configured for insulation and isolation between the end cover 231 and the riveting block 236.

In some examples, as shown in FIG. 4, the battery cell 20 further includes a pressure relief mechanism 237. The pressure relief mechanism 237 is configured to be actuated, when an internal pressure or temperature of the battery cell 20 reaches a threshold, to relieve the internal pressure or temperature of the battery cell 20. The pressure relief mechanism 237 may have various possible structures. For example, the pressure relief mechanism 237 may include a temperature-sensitive pressure relief mechanism. The temperature-sensitive pressure relief mechanism is configured to be capable of melting when the internal temperature of the battery cell 20 provided with the pressure relief mechanism 237 reaches a threshold. Additionally/alternatively, the pressure relief mechanism 237 may include a pressure-sensitive pressure relief mechanism. The pressure-sensitive pressure relief mechanism is configured to be capable of being cracked when an internal air pressure of the battery cell 20 provided with the pressure relief mechanism 237 reaches a threshold. For example, as shown in FIG. 4, the pressure relief mechanism 237 includes an annular portion 2371 and a patch 2372. The patch 2372 is configured to cover an opening of the annular portion 2371. When the internal pressure or temperature of the battery cell 20 reaches the threshold, the patch 2372 is destroyed, thereby discharging a high temperature and high pressure emission from the interior of the battery cell 20 to the exterior of the battery cell 20.

In some examples, as shown in FIG. 4, the battery cell 20 further includes a sealing ring 238, configured to form a sealing between the electrode terminal 232 and the end cover 231. For example, the sealing ring 238 may be annular, and rings the electrode terminal 232.

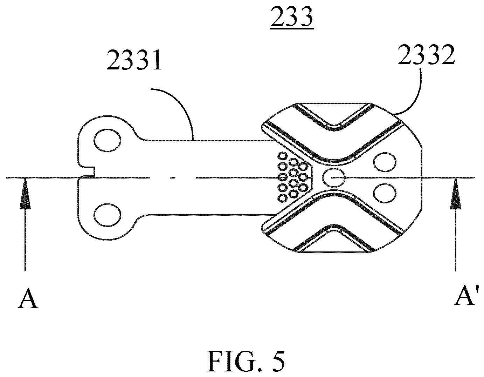

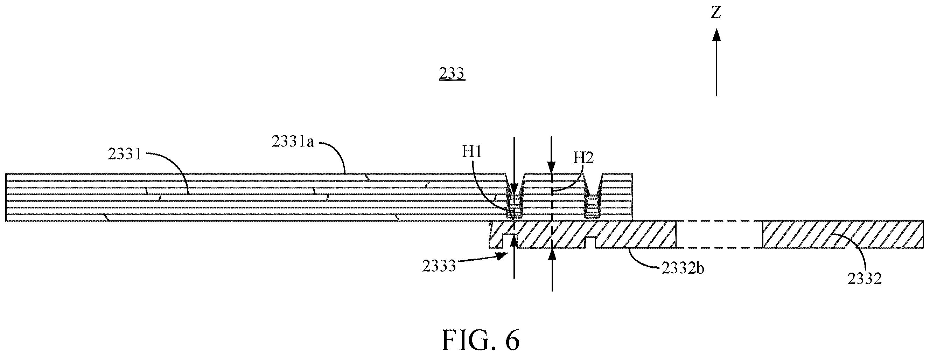

FIG. 5 and FIG. 6 show schematic diagrams of a connecting member 233 according to an example of the present application. FIG. 5 is a top view of a connecting member 233 according to an example of the present application. FIG. 6 is a cross-sectional view of the connecting member 233 in FIG. 5 along A-A'. As shown in FIG. 5 and FIG. 6, the connecting member 233 includes a first connecting element 2331 and a second connecting element 2332. A portion of the first connecting element 2331 and a portion of the second connecting element 2332 may be stacked and connected in a thickness direction Z of the connecting member 233. One of the first connecting element 2331 and the second connecting element 2332 is configured to be connected to a tab (not shown). The other of the first connecting element 2331 and the second connecting element 2332 is configured to be connected to an electrode terminal (not shown). A thickness H1 of the connecting member 233 at a connecting position 2333 of the first connecting element 2331 and the second connecting element 2332 is less than a sum H2 of maximum thicknesses of the first connecting element 2331 and the second connecting element 2332.

First, the sum H2 of maximum thicknesses of the first connecting element 2331 and the second connecting element 2332 may refer to a farthest distance between two surfaces (a first surface 2331a and a second surface 2332b) of the connecting member 233 opposite to each other in the thickness direction Z. For example, the connecting position 2333 of the first connecting element 2331 and the second connecting element 2332 includes a partial region of a stack region of the first connecting element 2331 and the second connecting element 2332. Then, the sum H2 of maximum thicknesses of the first connecting element 2331 and the second connecting element 2332 may be a thickness of the connecting member 233 in another region other than the connecting position 2333 in the stack region of the first connecting element 2331 and the second connecting element 2332. Alternatively, for example, the connecting position 2333 of the first connecting element 2331 and the second connecting element 2332 includes a partial region of a stack region of the first connecting element 2331 and the second connecting element 2332. Then, the sum H2 of maximum thicknesses of the first connecting element 2331 and the second connecting element 2332 may be a maximum thickness of the first connecting element 2331 and a maximum thickness of the second connecting element 2332 outside the stack region of the first connecting element 2331 and the second connecting element 2332.

The thickness of the first connecting element 2331 and the thickness of the second connecting element 2332 may refer to a plate thickness of the first connecting element 2331 and a plate thickness of the second connecting element 2332.

In addition, the connecting position 2333 of the first connecting element 2331 and the second connecting element 2332 refers to a position for fixing the first connecting element 2331 and the second connecting element 2332 together in the stack region of the first connecting element 2331 and the second connecting element 2332. For example, the first connecting element 2331 and the second connecting element 2332 are connected by means of welding. The connecting position 2333 of the first connecting element 2331 and the second connecting element 2332 is a welding position of the first connecting element 2331 and the second connecting element 2332. It may alternatively be understood as that, the connecting position 2333 of the first connecting element 2331 and the second connecting element 2332 is a position in the stack region for carrying a welding head.

In this example, the thickness H1 of the connecting member 233 at the connecting position 2333 of the first connecting element 2331 and the second connecting element 2332 is set to be less than the maximum thickness H2 of the first connecting element 2331 and the second connecting element 2332, which facilitates full friction between surfaces of the first connecting element 2331 and the second connecting element 2332 when the first connecting element 2331 and the second connecting element 2332 are connected together by means of welding, thereby improving bonding strength between the first connecting element 2331 and the second connecting element 2332.

In some examples, the first connecting element 2331 and/or the second connecting element 2332 are/is provided with a thinning region(s) at the connecting position 2333. For example, the first connecting element 2331 is provided with a thinning region at the connecting position 2333, and the second connecting element 2332 is not provided with a thinning region at the connecting position 2333. For another example, the first connecting element 2331 is not provided with a thinning region at the connecting position 2333, and the second connecting element 2332 is provided with a thinning region at the connecting position 2333. For another example, the first connecting element 2331 is provided with a thinning region at the connecting position 2333, and the second connecting element 2332 is also provided with a thinning region at the connecting position 2333.

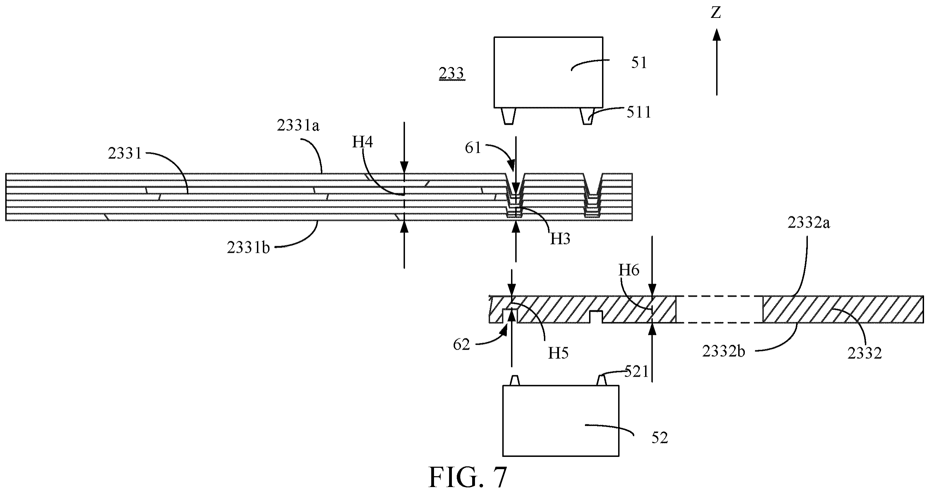

As shown in FIG. 7, the first connecting element 2331 is provided with a first thinning region 61 at the connecting position 2333. A thickness of the first connecting element 2331 at the connecting position 2333 is H3, and a thickness of the first connecting element 2331 at another region other than the connecting position 2333 is H4. The existence of the first thinning region 61 makes H3 less than H4. For another example, as shown in FIG. 7, the second connecting element 2332 is provided with a second thinning region 62 at the connecting position 2333. A thickness of the second connecting element 2332 at the connecting position 2333 is H5, and a thickness of the second connecting element 2332 at another region other than the connecting position 2333 is H6. The existence of the second thinning region 62 makes H5 less than H6.

In some examples, the thickness H4 of the first connecting element 2331 may refer to a distance between the first surface 2331a and a third surface 2331b of the first connecting element 2331 opposite to each other in the thickness direction Z. For example, the thickness H4 of the first connecting element 2331 may be equal to a farthest distance between the first surface 2331a of the first connecting element 2331 and the third surface 2331b of the first connecting element 2331. The thickness H4 of the first connecting element 2331 may alternatively refer to a thickness of a region other than the connecting position 2333 of the first connecting element 2331. Similarly, the thickness H6 of the second connecting element 2332 may refer to a distance between a fourth surface 2332a and the second surface 2332b of the second connecting element 2332 opposite to each other in the thickness direction Z. For example, the thickness H6 of the second connecting element 2332 may be equal to a farthest distance between the fourth surface 2332a of the second connecting element 2332 and the second surface 2332b of the second connecting element 2332. The thickness H6 of the second connecting element 2332 may alternatively refer to a thickness of a region other than the connecting position 2333 of the second connecting element 2332.

In some other examples, when the first connecting element 2331 and/or the second connecting element 2332 include(s) a plurality of connecting plates, the thickness H4 of the first connecting element 2331 and/or the thickness H6 of the second connecting element 2332 may be a sum of thicknesses of the plurality of connecting plates.

In this example, the first connecting element 2331 and/or the second connecting element 2332 are/is provided with the thinning region(s) at the connecting position 2333, so that when the first connecting element 2331 and the second connecting element 2332 are connected, the first connecting element 2331 and/or the second connecting element 2332 can be better penetrated, thereby more facilitating fixed bonding of the first connecting element 2331 and the second connecting element 2332.

In some examples, the first connecting element 2331 and the second connecting element 2332 are fixedly connected by means of welding. For example, as shown in FIG. 7, a portion of the first connecting element 2331 and a portion of the second connecting element 2332 are stacked and placed between a welding head 51 and a welding base 52. The welding head 51 has welding teeth 511. The welding base 52 has welding teeth 521. The welding teeth 511 press the first connecting element 2331 to form the first thinning region 61 of the first connecting element 2331. The welding teeth 521 press the second connecting element 2332 to form the second thinning region 62 of the second connecting element 2332.

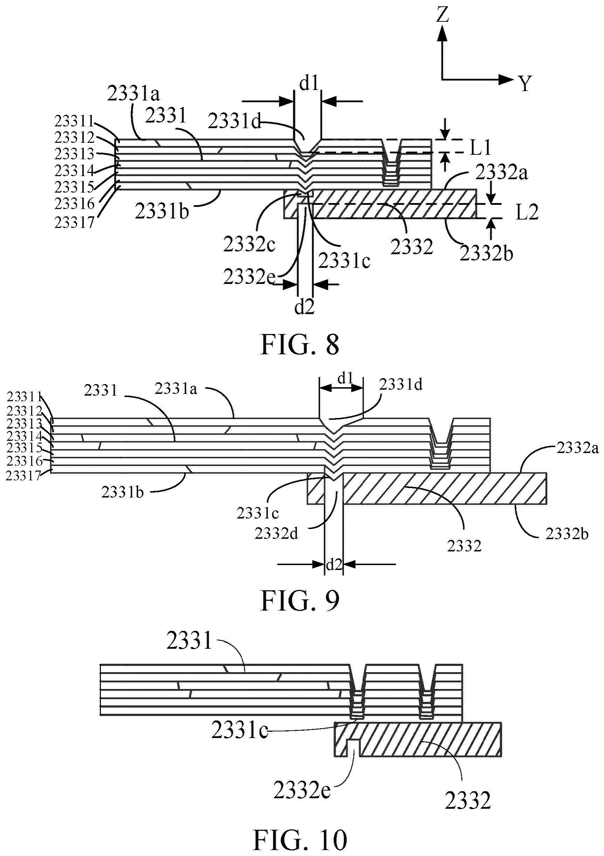

In an example, the second connecting element 2332 is provided with the second thinning region 62 at the connecting position 2333. The second connecting element 2332 is provided with a first groove 2332c open toward the first connecting element 2331 at the connecting position 2333. The second thinning region 62 of the second connecting element 2332 includes the first groove 2332c. For example, as shown in FIG. 8, the fourth surface 2332a of the second connecting element 2332 may be recessed toward the second surface 2332b of the second connecting element 2332 in the thickness direction Z, so as to form the first groove 2332c.

In this example, the second connecting element 2332 is provided with the first groove 2332c open toward the first connecting element 2331 at the connecting position 2333, so that the thickness of the connecting member 233 can be reduced at the connecting position 2333, thereby facilitating fixed connection between the first connecting element 2331 and the second connecting element 2332, and improving the bonding strength between the first connecting element 2331 and the second connecting element 2332.

In another example, the second connecting element 2332 is provided with the second thinning region 62 at the connecting position 2333. The second connecting element 2332 is provided with a through hole 2332d at the connecting position 2333. The second thinning region 62 of the second connecting element 2332 includes the through hole 2332d. For example, as shown in FIG. 9, the fourth surface 2332a of the second connecting element 2332 may be recessed toward the second surface 2332b of the second connecting element 2332 in the thickness direction Z and extend through the second connecting element 2332, thereby forming the through hole 2332d.

In this example, on one hand, the through hole 2332d may enable a portion of the first connecting element 2331 to be embedded in the through hole 2332d, thereby improving the bonding strength between the first connecting element 2331 and the second connecting element 2332. On the other hand, the second connecting element 2332 is provided with the through hole 2332d at the connecting position 2333, so that the thickness of the connecting member 233 can be reduced at the connecting position 2333, thereby facilitating fixed connection between the first connecting element 2331 and the second connecting element 2332, and improving the bonding strength between the first connecting element 2331 and the second connecting element 2332.

In some examples, as shown in FIG. 8 and FIG. 9, the first connecting element 2331 is provided with a convex portion 2331c projecting toward the second connecting element 2332 at the connecting position 2333. The convex portion 2331c of the first connecting element 2331 is accommodated in the second thinning region 62 of the second connecting element 2332. For example, as shown in FIG. 8, the convex portion 2331c of the first connecting element 2331 is accommodated in the first groove 2332c of the second connecting element 2332. For another example, as shown in FIG. 9, the convex portion 2331c of the first connecting element 2331 is accommodated in the through hole 2332d of the second connecting element 2332.

In this example, the first connecting element 2331 is provided with the convex portion 2331c projecting toward the second connecting element 2332 at the connecting position 2333, and the convex portion 2331c is accommodated in the second thinning region 62 of the second connecting element 2332, so that the first connecting element 2331 may be fitted into the second connecting element 2332, thereby improving the bonding strength between the first connecting element 2331 and the second connecting element 2332.

In some examples, the convex portion 2331c may extend beyond the second surface 2332b or be level with the second surface 2332b, to further increase the bonding strength between the first connecting element 2331 and the second connecting element 2332.

In another example, as shown in FIG. 8, in addition to the first groove 2332c open toward the first connecting element 2331 at the connecting position 2333, the second connecting element 2332 is further provided with a second groove 2332e open away from the first connecting element 2331. The first groove 2332c and the second groove 2332e share a bottom wall. The second thinning region 62 of the second connecting element 2332 may alternatively include the second groove 2332e.

In this example, at the connecting position 2333, the second connecting element 2332 is provided with the first groove 2332c open toward the first connecting element 2331, and is provided with the second groove 2332e open away from the first connecting element 2331, so that the first connecting element 2331 can be fitted into the second connecting element 2332, and the thickness of the connecting member 233 at the connecting position 2333 can be further reduced, thereby further improving the bonding strength between the first connecting element 2331 and the second connecting element 2332.

Further, in some examples, as shown in FIG. 8 and FIG. 9, the first surface 2331a of the first connecting element 2331 is recessed toward the second connecting element 2332 at the connecting position 2333 to form the convex portion 2331c of the first connecting element 2331, where the first surface 2331a is a surface of the first connecting element 2331 far away from the second connecting element 2332.

In an example, if the first connecting element 2331 and the second connecting element 2332 are connected by means of welding, a recess of the first surface 2331a of the first connecting element 2331 may be formed by means of pressing by the welding head.

In this example, the first surface 2331a of the first connecting element 2331 is recessed toward the second connecting element 2332 at the connecting position 2333, so that the convex portion 2331c that is fitted into the second thinning region 62 of the second connecting element 2332 can be formed without increasing the thickness of the first connecting element 2331 at the connecting position 2333, thereby improving the bonding strength between the first connecting element 2331 and the second connecting element 2332.

In another example, the first surface 2331a of the first connecting element 2331 is recessed toward the second connecting element 2332 at the connecting position 2333 to form a first recessed portion 2331d. The first thinning region 61 of the first connecting element 2331 may include the first recessed portion 2331d. The first surface 2331a is a surface of the first connecting element 2331 far away from the second connecting element 2332.

In another example, the first surface 2331a of the first connecting element 2331 is recessed toward the second connecting element 2332 at the connecting position 2333, only the first recessed portion 2331d is formed, and the convex portion 2331c projecting toward the second connecting element 2332 is not formed.

In this example, the first surface 2331a of the first connecting element 2331 is recessed toward the second connecting element 2332 at the connecting position 2333 to form the first recessed portion 2331d, so that the thickness of the connecting member 233 can be reduced at the connecting position 2333, thereby facilitating the fixed connection between the first connecting element 2331 and the second connecting element 2332, and improving the bonding strength between the first connecting element 2331 and the second connecting element 2332.

In some examples, as shown in FIG. 8 and FIG. 9, a size d1 of a first recessed portion of the first connecting element 2331 at the connecting position 2333 is greater than a size d2 of a second recessed portion of the second connecting element 2332 at the connecting position 2333 in a first direction Y. The first recessed portion is formed by recessing the first surface 2331a of the first connecting element 2331 toward the second connecting element 2332 at the connecting position 2333. The second recessed portion is formed by recessing the second surface 2332b of the second connecting element 2332 toward the first connecting element 2331 at the connecting position 2333. The first surface 2331a is a surface of the first connecting element 2331 far away from the second connecting element 2332. The second surface 2332b is a surface of the second connecting element 2332 far away from the first connecting element 2331. The first direction Y is perpendicular to the thickness direction Z of the connecting member 233.

For example, the first recessed portion may be the first recessed portion 2331d shown in FIG. 8. The second recessed portion may be the second groove 2332e shown in FIG. 8. Alternatively, the second recessed portion may be the through hole 2332d shown in FIG. 9.

For example, if shapes of orthographic projections of the first recessed portion of the first connecting element 2331 and the second recessed portion of the second connecting element 2332 in a plane perpendicular to the thickness direction Z of the connecting member 233 are circular, the first direction Y may be considered as a radial direction. To be specific, d1 is a diameter of the first recessed portion of the first connecting element 2331, and d2 is a diameter of the second recessed portion of the second connecting element 2332. In some examples, if a diameter of the first recessed portion of the first connecting element 2331 gradually decreases in a direction from the first surface 2331a to the third surface 2331b of the first connecting element 2331, d1 may be a maximum diameter of the first recessed portion of the first connecting element 2331. For another example, if the shapes of the orthographic projections of the first recessed portion of the first connecting element 2331 and the second recessed portion of the second connecting element 2332 in the plane perpendicular to the thickness direction Z of the connecting member 233 are square, the first direction Y may be considered as a width direction or a length direction of the connecting member 233. To be specific, d1 may be a size of the first recessed portion of the first connecting element 2331 in the length direction, and d2 may be a size of the second recessed portion of the second connecting element 2332 in the length direction. Alternatively, d1 may be a size of the first recessed portion of the first connecting element 2331 in the width direction, and d2 may be a size of the second recessed portion of the second connecting element 2332 in the width direction. Similarly, if the size, in the first direction Y, of the first recessed portion of the first connecting element 2331 in a direction from the first surface 2331a to the third surface 2331b of the first connecting element 2331 gradually decreases, d1 may be a maximum size of the first recessed portion of the first connecting element 2331 in the first direction Y.

In this example, the size d1 of the first recessed portion of the first connecting element 2331 at the connecting position 2333 is set to be greater than the size d2 of the second recessed portion of the second connecting element 2332 at the connecting position 2333, to facilitate penetration of the first connecting element 2331 and better bond the first connecting element 2331 and the second connecting element 2332 together, thereby improving the bonding strength between the first connecting element 2331 and the second connecting element 2332.

In some other examples, as shown in FIG. 8, a size L1 of the first recessed portion of the first connecting element 2331 at the connecting position 2333 is greater than a size L2 of the second recessed portion of the second connecting element 2332 at the connecting position 2333 in the thickness direction Z of the connecting member 233. For example, L1 is a maximum size of the first recessed portion of the first connecting element 2331 in the thickness direction Z. L2 is a maximum size of the thinning region of the second connecting element 2332 in the thickness direction Z.

In this example, the size L1 of the first recessed portion of the first connecting element 2331 at the connecting position 2333 is set to be greater than the size L2 of the second recessed portion of the second connecting element 2332 at the connecting position 2333 in the thickness direction Z of the connecting member 233, to better bond the first connecting element 2331 and the second connecting element 2332 together, thereby improving the bonding strength between the first connecting element 2331 and the second connecting element 2332.

It should be noted that, in the first direction Y, the size of the first recessed portion may depend on a size of the welding teeth 511, and the size of the second recessed portion may depend on a size of the welding teeth 521. For example, d1 is greater than or equal to the size of the welding teeth 511 in the first direction Y, and d2 is greater than or equal to the size of the welding teeth 521 in the second direction Y. It may alternatively be understood that the shape and size of the first recessed portion match the shape and size of the welding teeth 511, and the shape and size of the second recessed portion match the shape and size of the welding teeth 521.

In some examples, a shape of an orthographic projection of the thinning region of the second connecting element 2332 in a plane perpendicular to the thickness direction Z of the connecting member 233 is circular or square. In other words, a shape of a projection, in the thickness direction Z, of the thinning region in the plane perpendicular to the thickness direction Z of the connecting member 233 is circular or square. Similarly, the shape of the orthographic projection of the first recessed portion 2331d of the first connecting element 2331 in the plane perpendicular to the thickness direction Z of the connecting member 233 is also circular or square.

In this example, the shape of the orthographic projection of the thinning region in the plane perpendicular to the thickness direction Z of the connecting member 233 is set to be circular or square, facilitating processing of the thinning region.

In another example, the shape of the orthographic projection of the thinning region in the plane perpendicular to the thickness direction Z of the connecting member 233 may alternatively be another shape, such as a polygon or an ellipse. This is not limited in this example of the present application.

In some examples, the first connecting element 2331 is configured to be connected to the electrode terminal. The second connecting element 2332 is configured to be connected to the tab. The first connecting element 2331 includes a plurality of connecting plates. The second connecting element 2332 includes a single connecting plate. The plurality of connecting plates may be formed by sequentially stacking a plurality of metal plates. For example, as shown in FIG. 8 and FIG. 9, the first connecting element 2331 includes a first connecting plate 23311, a second connecting plate 23312, a third connecting plate 23313, a fourth connecting plate 23314, a fifth connecting plate 23315, a sixth connecting plate 23316, and a seventh connecting plate 23317 that are stacked together.

In this example, the first connecting element 2331 connected to the electrode terminal is configured to include the plurality of connecting plates, and the second connecting element 2332 connected to the tab is configured to include the single connecting plate, so that over-current and internal resistance satisfy requirements of a power-type battery, thereby facilitating improving performance of a battery including the connecting member 233.

In some examples, the connecting member 233 provided in this example of the present application may be applied to a cylindrical battery.

At present, in a common cylindrical battery, a tab of an electrode assembly is flattened and welded to a connecting member. The connecting member is bent to fit an end cover and a case together. For a non-power-type battery, an internal resistance of a cylinder is relatively large, and an over-current requirement is relatively low. However, for a power-type battery, the internal resistance and the over-current requirement of the battery are particularly high. However, to facilitate bending and process welding, the connecting member cannot be made to be excessively thick. Therefore, an over-current area S is very small. In addition, because the connecting member needs to be bent, a length L of the connecting member is relatively large. According to a resistance calculation formula R=ρ*L/S (where ρ is a material density of the connecting member), the internal resistance of the connecting member becomes very large, and over-current and internal resistance cannot satisfy requirements of a power-type battery. However, the first connecting element connected to the electrode terminal is configured to include the plurality of connecting plates, and the second connecting element connected to the tab is configured to include the single connecting plate, so that the over-current and the internal resistance satisfy the requirements of the power-type battery, thereby improving performance of the battery.

In some examples, as shown in FIG. 8 and FIG. 9, at least one connecting plate, close to the single connecting plate, among the plurality of connecting plates is bent toward the single connecting plate at the connecting position 2333 to form a convex portion 2331c. The single connecting plate is provided with a through hole 2332d, or the single connecting plate is provided with a groove 2332c open toward the plurality of connecting plates. The convex portion 2331c of the plurality of connecting plates is embedded in the groove 2332c or the through hole 2332d of the single connecting plate.

In this example, the plurality of connecting plates have a relatively large thickness, and bending has little impact on the plurality of connecting plates. Therefore, the convex portion 2331c formed by bending the plurality of connecting plates is embedded in the groove 2332c or the through hole 2332d provided in the single connecting plate, so that the bonding strength between the first connecting element 2331 and the second connecting element 2332 can be improved without affecting the performance of the connecting member 233.

In some examples, as shown in FIG. 10, the thickness of the second connecting element 2332 at the connecting position 2333 may alternatively be reduced by providing only the second groove 2332e for the second connecting element 2332, and not providing the first groove 2332c, so as to reduce the thickness of the connecting member 233 at the connecting position 2333. In addition, in the connecting member 233 shown in FIG. 10, the first connecting element 2331 may be provided with a convex portion 2331c projecting toward the second connecting element 2332, or may not be provided with the convex portion 2331c. This is not limited in this example of the present application.

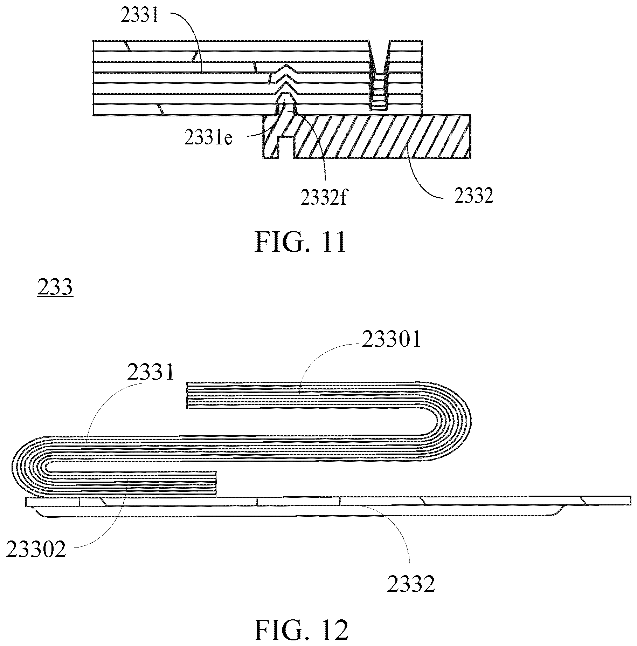

In another example, as shown in FIG. 11, a convex portion 2332f may be formed by the single connecting plate projecting toward the plurality of connecting plates at the connecting position 2333, and the plurality of connecting plates are provided with a groove 2331e facing the single connecting plate at the connecting position 2333. The convex portion 2332f is embedded in the groove 2331 e.

The convex portion 2332f may be formed by pressing, stamping, or bending.

In some examples, the first thinning region 61 of the first connecting element 2331 and/or the second thinning region 62 of the second connecting element 2332 may be formed before the first connecting element 2331 and the second connecting element 2332 are connected. For example, the formed first connecting element 2331 includes the first thinning region 61, and the formed second connecting element 2332 includes the second thinning region 62. However, a person skilled in the art understands that, for another example, before the first connecting element 2331 and the second connecting element 2332 are connected, the first connecting element 2331 is thinned by using a thinning technology, to form the first thinning region 61, and the second connecting element 2332 is thinned by using the thinning technology, to form the second thinning region 62.

In an example, there may be a plurality of thinning regions of the first connecting element 2331. Shapes and sizes of orthographic projections of the plurality of thinning regions of the first connecting element 2331 in the plane perpendicular to the thickness direction Z of the connecting member 233 may be the same or may be different.

In another example, there may be a plurality of thinning regions of the second connecting element 2332. Shapes and sizes of orthographic projections of the plurality of thinning regions of the second connecting element 2332 in the plane perpendicular to the thickness direction Z of the connecting member 233 may be the same or may be different.

In an example of the present application, the connecting member 233 is a negative connecting member. A material of the first connecting element 2331 includes copper. A material of the second connecting element 2332 includes surface-nickeled copper.

In this example, the plurality of connecting plates in the negative connecting member are made of copper, and the single connecting plate is made of surface-nickeled copper, so that reflection of light of the negative connecting member during laser welding with the negative tab can be reduced while the conductivity of the negative connecting member is improved, thereby improving a welding effect between the negative connecting member and the negative tab. The plurality of connecting plates are made of copper, so as to be conveniently connected to the negative electrode terminal also made of copper.

In another example of the present application, the connecting member 233 is a positive connecting member. A material of the first connecting element 2331 includes aluminum. A material of the second connecting element 2332 includes surface-inked aluminum.

In this example, the plurality of connecting plates in the positive connecting member are made of aluminum, and the single connecting plate is made of surface-inked aluminum, so that reflection of light of the positive connecting member during laser welding with the positive tab can be reduced while the conductivity of the positive connecting member is improved, thereby improving a welding effect between the positive connecting member and the positive tab. The plurality of connecting plates are made of aluminum, so as to be conveniently connected to the positive electrode terminal also made of aluminum.

The surface-inked aluminum may be surface-blackened aluminum. The composition of ink may include a chromium-containing metal dye.

In some examples, the first connecting element 2331 and the second connecting element 2332 are connected by means of ultrasonic welding to form the connecting position.

In this example, the first connecting element 2331 and the second connecting element 2332 are connected by means of ultrasonic welding, which is high in welding speed, low in pollution, and low in cost.

The ultrasonic welding refers to transmitting an ultrasonic wave vibrating at a high frequency to surfaces of two to-be-welded objects, and fusing the surfaces of the two objects by means of friction under pressing. The limitation of the ultrasonic welding is that the thickness of the connecting member cannot be excessively large. Therefore, in this example of the present application, a thickness H1 of the connecting member 233 at a welding position of the first connecting element 2331 and the second connecting element 2332 is set to be less than a thickness H2 of the connecting member 233 in another region in the stack region of the first connecting element 2331 and the second connecting element 2332 other than the connecting position 2333 of the first connecting element 2331 and the second connecting element 2332, so as to ensure full friction between the surfaces of the first connecting element 2331 and the second connecting element 2332, thereby improving welding strength of the first connecting element 2331 and the second connecting element 2332.

In another example, the first connecting element 2331 and the second connecting element 2332 may alternatively be connected in another manner, for example, laser welding.

An example of the present application further provides a battery cell. The battery cell includes an electrode assembly, an electrode terminal, and a connecting member 233 described in the foregoing examples. A tab of the electrode assembly is connected to the electrode terminal by using the connecting member. It should be understood that, for connection relationships between the electrode assembly, the electrode terminal, and the tab of the electrode assembly in the battery cell according to this example of the present application and respective structures, refer to the descriptions in FIG. 3 and FIG. 4. For brevity, details are not described herein again.

In some examples, a first connecting element 2331 of the connecting member 233 includes a plurality of connecting plates. A second connecting element 2332 of the connecting member 233 includes a single connecting plate. The first connecting element 2331 is connected to the electrode terminal. The second connecting element 2332 is connected to the tab. The first connecting element 2331 is connected to a side, far away from the tab, of the second connecting element 2332.

In this example, compared with connecting the plurality of connecting plates to a side, close to the tab, of the single connecting plate, connecting the plurality of connecting plates to the side, far away from the tab, of the single connecting plate facilitates bending and process welding of the connecting member 233.

In some other examples, as shown in FIG. 12, the first connecting element 2331 includes two bending portions. A first bending portion 23301 of the two bending portions is connected to the electrode terminal (not shown). A second bending portion 23302 of the two bending portions is connected to the second connecting element 2332. A bending direction of the first bending portion 23301 is opposite to a bending direction of the second bending portion 23302.

In other words, the plurality of connecting plates in the connecting member 233 may be bent twice, and the bent connecting member 233 may have a "Z" shape.

In this example, the plurality of connecting plates of the connecting member 233 are bent twice to connect the tab and the electrode terminal together, facilitating reducing space occupied by the connecting member 233 in the battery cell.

An example of the present application further provides a battery. The battery includes a plurality of battery cells according to this example of the present application.

An example of the present application further provides a power consuming apparatus, including a battery according to the foregoing example. The battery is configured to supply electric energy to the power consuming apparatus.

The power consuming apparatus may be the vehicle shown in FIG. 1, or may be any apparatus using a battery.

An example of the present application further provides a connecting element. A first end of the connecting element is provided with a thinning region, and the first end of the connecting element is configured to be stacked with a first end of another connecting element in a thickness direction of the connecting element and is welded in the thinning region. One of a second end of the connecting element and a second end of the other connecting element is configured to be connected to a tab. The other of the second end of the connecting element and the second end of the other connecting element is configured to be connected to an electrode terminal.

In some examples, the connecting element may be the first connecting element 2331 in the foregoing examples, and the thinning region is the first thinning region 61 of the first connecting element 2331.

In some other examples, the connecting element may be the second connecting element 2332 in the foregoing examples, and the thinning region is the second thinning region 62 of the second connecting element 2332.

In some other examples, the connecting element may be the first connecting element 2331 in the foregoing examples, and another connecting element may be the second connecting element 2332. Alternatively, the connecting element may be the second connecting element 2332 in the foregoing examples, and another connecting element may be the first connecting element 2331.

Although the present application is described with reference to preferred examples, various improvements may be made to the present application and components therein may be replaced with equivalents without departing from the scope of the present application. Especially, as long as there is no structural conflict, the various technical features mentioned in each example can be combined in any way. The present application is not limited to the particular examples disclosed herein, but includes all technical solutions that fall within the scope of the claims.

## Claims

1. A connecting member, comprising: a first connecting element and a second connecting element, one of the first connecting element and the second connecting element being configured to be connected to a tab, the other of the first connecting element and the second connecting element being configured to be connected to an electrode terminal, and a portion of the first connecting element and a portion of the second connecting element being stacked and connected in a thickness direction of the connecting member, wherein
a thickness of the connecting member at a connecting position of the first connecting element and the second connecting element is less than a sum of maximum thicknesses of the first connecting element and the second connecting element.

2. The connecting member according to claim 1, wherein the first connecting element and/or the second connecting element are/is provided with a thinning region(s) at the connecting position.

3. The connecting member according to claim 2, wherein the second connecting element is provided with a second thinning region at the connecting position, the second connecting element is provided with a first groove open toward the first connecting element at the connecting position, and the second thinning region of the second connecting element comprises the first groove.

4. The connecting member according to claim 2, wherein the second connecting element is provided with a second thinning region at the connecting position, the second connecting element is provided with a through hole at the connecting position, and the second thinning region of the second connecting element comprises the through hole.

5. The connecting member according to claim 3, wherein the second connecting element is further provided with a second groove open away from the first connecting element at the connecting position, and the first groove and the second groove share a bottom wall.

6. The connecting member according to claim 2, wherein the second connecting element is provided with a second thinning region at the connecting position, the second connecting element is provided with a second groove open away from the first connecting element at the connecting position, and the second thinning region of the second connecting element comprises the second groove.

7. The connecting member according to any one of claims 3 to 5, wherein the first connecting element is provided with a convex portion projecting toward the second connecting element at the connecting position, and the convex portion of the first connecting element is accommodated in the second thinning region of the second connecting element.

8. The connecting member according to any one of claims 2 to 7, wherein the first connecting element is provided with a first thinning region at the connecting position, a first surface of the first connecting element is recessed toward the second connecting element at the connecting position to form a first recessed portion, the first thinning region of the first connecting element comprises the first recessed portion, and the first surface is a surface of the first connecting element far away from the second connecting element.

9. The connecting member according to any one of claims 2 to 8, wherein a size of a first recessed portion of the first connecting element is greater than a size of a second recessed portion of the second connecting element in a first direction, the first recessed portion is formed by recessing a first surface of the first connecting element toward the second connecting element at the connecting position, the second recessed portion is formed by recessing a second surface of the second connecting element toward the first connecting element at the connecting position, the first surface is a surface of the first connecting element far away from the second connecting element, the second surface is a surface of the second connecting element far away from the first connecting element, and the first direction is perpendicular to the thickness direction of the connecting member.

10. The connecting member according to any one of claims 2 to 9, wherein a size of a first recessed portion of the first connecting element is greater than a size of a second recessed portion of the second connecting element in the thickness direction of the connecting member, the first recessed portion is formed by recessing a first surface of the first connecting element toward the second connecting element at the connecting position, the second recessed portion is formed by recessing a second surface of the second connecting element toward the first connecting element at the connecting position, the first surface is a surface of the first connecting element far away from the second connecting element, and the second surface is a surface of the second connecting element far away from the first connecting element.

11. The connecting member according to any one of claims 2 to 10, wherein a shape of an orthographic projection of the thinning region in a plane perpendicular to the thickness direction of the connecting member is circular or square.

12. The connecting member according to any one of claims 1 to 11, wherein the first connecting element is configured to be connected to the electrode terminal, the second connecting element is configured to be connected to the tab, the first connecting element comprises a plurality of connecting plates, and the second connecting element comprises a single connecting plate.

13. The connecting member according to claim 12, wherein at least one connecting plate, close to the single connecting plate, among the plurality of connecting plates is bent toward the single connecting plate at the connecting position to form a convex portion;
the single connecting plate is provided with a through hole, or the single connecting plate is provided with a groove open toward the plurality of connecting plates, and the convex portion of the plurality of connecting plates is embedded in the groove or the through hole of the single connecting plate.

14. The connecting member according to claim 12 or 13, wherein the connecting member is a negative connecting member, a material of the first connecting element comprises copper, and a material of the second connecting element comprises surface-nickeled copper.

15. The connecting member according to claim 12 or 13, wherein the connecting member is a positive connecting member, a material of the first connecting element comprises aluminum, and a material of the second connecting element comprises surface-inked aluminum.

16. The connecting member according to any one of claims 1 to 15, wherein the first connecting element and the second connecting element are connected by means of ultrasonic welding to form the connecting position.

17. A battery cell, comprising an electrode assembly, an electrode terminal, and a connecting member according to any one of claims 1 to 16, a tab of the electrode assembly and the electrode terminal being connected by using the connecting member.

18. The battery cell according to claim 17, wherein the first connecting element comprises a plurality of connecting plates, the second connecting element comprises a single connecting plate, the first connecting element is connected to the electrode terminal, the second connecting element is connected to the tab, and the first connecting element is connected to a side, far away from the tab, of the second connecting element.

19. The battery cell according to claim 18, wherein the first connecting element comprises two bending portions, a first bending portion of the two bending portions is connected to the electrode terminal, and a second bending portion of the two bending portions is connected to the second connecting element,
a bending direction of the first bending portion being opposite to a bending direction of the second bending portion.

20. A battery, comprising a plurality of battery cells according to any one of claims 17 to 19.

21. A power consuming apparatus, comprising a battery according to claim 20, the battery supplying electric energy to the power consuming apparatus.

22. A connecting element, a first end of the connecting element being provided with a thinning region, the first end of the connecting element being configured to be stacked with a first end of another connecting element in a thickness direction of the connecting element and being welded in the thinning region to form a connecting member, one of a second end of the connecting element and a second end of the other connecting element being configured to be connected to a tab, and the other of the second end of the connecting element and the second end of the other connecting element being configured to be connected to an electrode terminal, wherein a thickness of the connecting member at a welding position of the connecting element and the other connecting element is less than a sum of maximum thicknesses of the connecting element and the other connecting element.
